# EUROPÄISCHE PATENTSCHRIFT

(11) **EP 1 574 411 B1**
(45) Veröffentlichungstag und Bekanntmachung des Hinweises auf die Patenterteilung: **25.05.2011**
(21) Anmeldenummer: 05004497.3
(22) Anmeldetag: 02.03.2005
(51) Int. Cl.: B60T 7/04, B60T 15/04

(54) **Fusspedaleinrichtung eines Fahrzeugs**
Foot pedal device for a vehicle
Dispositif à pédale pour véhicule

(30) Priorität: 08.03.2004 DE 202004003538 U
(43) Veröffentlichungstag der Anmeldung: 14.09.2005
(73) Patentinhaber: KNORR-BREMSE Systeme für Nutzfahrzeuge GmbH, 80809 München (DE)
(72) Erfinder: Roether, Friedbert, 74389 Cleebronn (DE); Gassmann, Heiner, 73734 Esslingen (DE); Ulrich, Manfred, 71696 Möglingen (DE); Wahl, Karl, 71706 Markgröningen (DE)
(74) Vertreter: Schönmann, Kurt

(56) Entgegenhaltungen:
- EP-A- 0 267 881
- DE-A1- 2 937 657
- US-A- 4 784 442
- US-A- 5 395 164

## Beschreibung

### Stand der Technik

Die Erfindung geht aus von einer Fußpedaleinrichtung eines Fahrzeugs nach der Gattung des Anspruchs 1.

Aus dem Stand der Technik ist eine Fußpedaleinrichtung eines Nutzfahrzeugs bekannt, bei welcher die Stößelaufnahme, der Mitnehmer sowie die Federaufnahme jeweils getrennte, aneinander befestigte Bauteile sind. Hierfür sind mehrere Zentrierflächen sowie einige Fertigungsschritte notwendig, um die einzelnen Bauteile aneinander zu montieren.

Bei der gattungsgemäßen Fußpedaleinrichtung greift ein Stift eines Potentiometers federbelastet an einer oberen Stirnfläche des kombinierten Kraftübertragungs- und Mitnehmerelements an, wobei der Stift umso mehr axial verfährt je weiter das Pedal niedergetreten wird, so dass in dem Potentiometer ein dem Pedalweg proportionales elektrisches Signal für ein Steuergerät eines beispielsweise elektrischen Bremskreises erzeugt wird.

Nachteilig dabei ist, dass der Stift in seiner Führung am Potentiometer verkanten oder hängen blieben kann somit kein Signal oder ein falsches Signal an das Steuergerät geliefert wird, was vor allem bei elektrischen Bremspedalmoduln zu einem hohen Sicherheitsrisiko führt. Weiterhin führt die kopfseitige Anordnung der Potentiometereinheit zu einer relativ großen axialen Ausdehnung der Fußpedaleinrichtung, so dass diese relativ hoch baut, was angesichts des begrenzten Fußraums von Kraftfahrzeugen von Nachteil ist.

Dokument EP 0267881 A1 offenbart eine fußpedaleinrichtung gemäß dem Oberbegriff des Anspruchs 1.

Gemäß US-A-5 395 164 wird ein induktiver Sensor offenbart, welcher ebenfalls in axialer Verlängerung angeordnet ist.

Bei der US-A- 4 784 442 ist kein Potentiometer sondern ein induktiver Sensor (Spule und Kern) vorhanden. Hier wird allerdings nicht der absolute Weg des Fußpedals gemessen, sondern der relative Weg zwischen zwei Elementen, weil die Kraftübertragung zwischen den beiden Elementen durch eine Feder erfolgt und der Kern an dem einen Element und die Spule am anderen Element angeordnet ist.

Nach der DE 29 37 657 A1 ist das Potentiometer 1 seitlich angeordnet. Jedoch wird dessen Stellstift mittels einer mit einem Stößel zusammen wirkenden Platte betätigt, was einen größeren Bauaufwand bedingt, da die Platte zusätzlich vorgesehen werden muss.

Der vorliegenden Erfindung liegt demgegenüber die Aufgabe zugrunde, eine Fußpedaleinrichtung der eingangs erwähnten Art derart weiter zu entwickeln, dass es bei geringer Bauhöhe eine höhere Funktionssicherheit aufweist.

Erfindungsgemäß wird diese Aufgabe durch die Merkmale des Anspruchs 1 gelöst.

### Offenbarung der Erfindung

Gemäß Anspruch 1 wird zumindest die Stößelaufnahme, den Mitnehmer und die Federaufnahme als einstückiges kombiniertes Kraftübertragungs- und Mitnehmerelement ausgeführt. Dadurch können eine Reihe von Montage- und Fertigungsschritten eingespart werden, wodurch die Fußpedaleinrichtung einfacher und kostengünstiger fertigbar ist.

Weiterhin ist erfindungsgemäß vorgesehen, dass der Mitnehmer des kombinierten Kraftübertragungs- und Mitnehmerelements der Stößelaufnahme (4) und der Federaufnahme (30) axial zwischenangeordnet als umlaufende Ringnut ausgebildet ist, in welche ein Stellstift wenigstens eines Potentiometers eingreift, und dass das Potentiometer in Bezug zu dem kombinierten Kraftübertragungs- und Mitnehmerelement seitlich angeordnet ist.

Durch die in den Unteransprüchen aufgeführten Maßnahmen sind vorteilhafte Weiterbildungen und Verbesserungen der im Anspruch 1 angegebenen Erfindung möglich.

### Zeichnungen

Ein Ausführungsbeispiel der Erfindung ist in der Zeichnung dargestellt und in der nachfolgenden Beschreibung näher erläutert. In der Zeichnung zeigt die einzige

Figur eine Schnittdarstellung einer Fußpedaleinrichtung eines Nutzfahrzeugs gemäß der Erfindung in einer bevorzugten Ausführungsform.

### Beschreibung des Ausführungsbeispiels

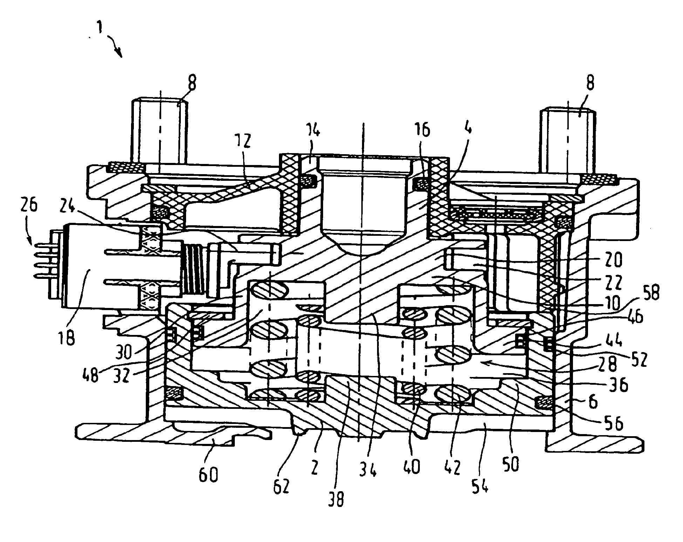

In Fig.1 ist eine bevorzugte Ausführungsform einer Fußpedaleinrichtung 1 eines Nutzfahrzeugs gezeigt, welche die auf ein nicht dargestelltes Fußpedal, beispielsweise ein Fußbremspedal ausgeübte Pedalkraft auf einen Kolben 2

überträgt, an welchem ein den Bremsdruck in Bremszylindern beeinflussender Druck ansteht. Die Einleitung der Betätigungskraft in die Fußpedaleinrichtung 1 erfolgt über eine nicht gezeigte Stößelstange, welche in einen Stößelaufnahmeabschnitt 4 der Fußpedaleinrichtung eingreift.

Die Fußpedaleinrichtung 1 hat ein vorzugsweise zylindrisches Gehäuse 6, das über Anschlusszapfen 8 an einem aus Maßstabsgründen nicht gezeigten Fußpedallagerbock befestigbar ist, von welchem sich die vom Fußpedal betätigte Stößelstange weg erstreckt, d.h. bei Betätigung des Fußpedals vollzieht die Stößelstange eine lineare Ein- bzw. Ausfahrbewegung.

An ihrer zur Stößelstange gewandten Stirnfläche eines kombinierten Kraftübertragungs- und Mitnehmerelements 10 ist der sacklochförmige Stößelaufnahmeabschnitt 4 zum Eingriff der Stößelstange und zur Übertragung der auf den Stößel wirkenden Pedalkraft auf das kombinierte Kraftübertragungs- und Mitnehmerelement 10 angeordnet. Dieser Stößelaufnahmeabschnitt 4 ist in einem in eine Durchgangsöffnung eines Verschlussdeckels 12 ragenden Hohlzapfen 14 des kombinierten Kraftübertragungs- und Mitnehmerelements 10 ausgebildet. Der Verschlussdeckel 12 besteht vorzugsweise aus Kunststoff. Mittels eines in einer radial äußeren Ringnut des Hohlzapfens 14 gehaltenen O-Rings 16 erfolgt eine Abdichtung des Inneren des Gehäuses 6 gegenüber der Umgebung.

Einem sich axial an den Stößelaufnahmeabschnitt 4 anschließenden Mittelabschnitt des kombinierten Kraftübertragungs- und Mitnehmerelements 10 ist ein mit einem Pedalwegaufnehmer 18 zusammenwirkender Mitnehmerabschnitt 20 angeformt, welcher bevorzugt eine umlaufende Ringnut 22 aufweist, in welche ein Stellstift 24 von vorzugsweise zwei den Pedalwegaufnehmer bildenden Potentiometern 18 eingreift, welche abhängig von der axialen Position des kombinierten Kraftübertragungs- und Mitnehmerelements 10 elektrische Pedalwegsignale für ein aus Maßstabsgründen nicht gezeigtes elektronisches Steuergerät einer elektro-pneumatischen Bremseinrichtung erzeugen. Quer zu einer Längsachse des Gehäuses 6 sind nach außen ragende Anschlussstifte 26 für die Potentiometer 18 vorhanden. Die Bremseinrichtung ist derart ausgebildet, dass sie abhängig vom Pedalwegsignal ein elektrisches Stellsignal für Bremszylinder ansteuernde Bremsmodule erzeugt. Die Potentiometer 18, das elektronische Steuergerät und die Bremsmodule bilden zusammen einen elektrischen Bremskreis der Bremseinrichtung.

An dem vom Stößelaufnahmeabschnitt 4 abgewandten Ende des kombinierten Kraftübertragungs- und Mitnehmerelements 10 ist eine Federeinrichtung 28 angeordnet, die sich einendseitig an einem Federaufnahmeabschnitt 30 des kombinierten Kraftübertragungs- und Mitnehmerelements 10 und anderendseitig an dem im Gehäuse 6 verschieblichen Kolben 2 abstützt. Der Federaufnahmeabschnitt 30 weist eine becherförmige, zum Kolben 2 hin offene Ausnehmung 32 mit einem zentralen Zentrierzapfen 34 auf. Der hierzu koaxiale Kolben 2 hat ebenfalls eine becherförmige, zum Federaufnahmeabschnitt 30 des kombinierten Kraftübertragungs- und Mitnehmerelements 10 hin offene Ausnehmung 36 mit einem zentralen Zentrierzapfen 38.

Die Federeinrichtung 28 besteht vorzugsweise aus zwei koaxial ineinander und endseitig jeweils auf den Zentrierzapfen 34, 38 des Federaufnahmeabschnitts 30 bzw. des Kolbens 2 gesteckten Schraubenfedern 40, 42. Eine äußere Schraubenfeder 42 der Federeinrichtung 28 ist über ihren Außendurchmesser jeweils am Innendurchmesser einer Wandung der becherförmigen Ausnehmung 32, 36 und eine innere Schraubenfeder 40 am Außendurchmesser des Zentrierzapfens 34, 38 des Federaufnahmeabschnitts 30 des kombinierten Kraftübertragungs- und Mitnehmerelements 10 bzw. des Kolbens 2 geführt. Von Reibungskräften abgesehen kann eine axiale Kraft zwischen dem Kolben 2 und dem kombinierten Kraftübertragungs- und Mitnehmerelement 10 lediglich durch die Federeinrichtung 28 übertragen werden.

Das kombinierte Kraftübertragungs- und Mitnehmerelement 10 besteht folglich aus drei axial hintereinander angeordneten Abschnitten, welche in einem einzigen einstückigen Bauteil 10 zusammengefasst sind : Dem Stößelaufnahmeabschnitt 4, dem Mitnehmerabschnitt 20 und dem Federaufnahmeabschnitt 30. Das kombinierte Kraftübertragungs- und Mitnehmerelement 10 besteht weiterhin vorzugsweise aus Aluminium, alternativ kann es ein nach dem Pressvorgang warm ausgehärteter Fließpressformling sein oder aus irgendeinem anderen Material bestehen.

Zumindest der Federaufnahmeabschnitt 30 des kombinierten Kraftübertragungs- und Mitnehmerelements 10 ist am Kolben 2 linear geführt. Dies kann beispielsweise dadurch bewerkstelligt sein, dass an der Wandung der becherförmigen Ausnehmung 32 des Federaufnahmeabschnitts 30 des kombinierten Kraftübertragungs- und Mitnehmerelements 10 eine radial äußere Ringschulter 44 ausgebildet ist, die am Innendurchmesser der Wandung der becherförmigen Ausnehmung 36 des Kolbens 2 geführt ist. Um einen am radial inneren Durchmesser der Wandung der Ausnehmung 36 des Kolbens 2 entlang laufenden Führungsring 46 zu tragen, ist die Ringschulter 44 des Federaufnahmeabschnitts 30 des kombinierten Kraftübertragungs- und Mitnehmerelements 10 mit einer radial äußeren Ringnut versehen. Alternativ könnte der Kolben 2 auch am Innendurchmesser der Wandung der Ausnehmung 32 des Federaufnahmeabschnitts 30 des kombinierten Kraftübertragungs- und Mitnehmerelements 10 geführt sein.

Am Kolben 2 sind axiale Bewegungsanschläge für die Ringschulter 44 ausgebildet, beispielsweise in Form eines in eine radial innere Ringnut der Wandung der Ausnehmung 36 des Kolbens 2 gesteckten Rings 48 und einer Stirnfläche des Bodens 50 der Ausnehmung 36 des Kolbens 2. Demgegenüber verfügen auch der Deckel 12 und das Gehäuse 6 über je einen axialen Bewegungsanschlag 58, 60 für den Kolben 2.

Weiterhin ist der Kolben 2 in dem Gehäuse 6 vorzugsweise durch einen an seinem Außendurchmesser gehaltenen Führungsring 52 linear geführt. Eine durch den Kolben 2 begrenzte Druckkammer 54 wird durch einen am Außendurchmesser des Kolbens 2 gehaltenen O-Ring 56 gegen das Innere des Gehäuses 6 bzw. gegen die Umgebung abgedichtet. Der Kolben 2 und die Druckkammer 54 bilden Teile eines rein pneumatischen Bremskreises der Bremseinrichtung, als der in der Druckkammer 54 herrschende und von der axialen Lage des Kolbens 2 abhängige Druck den Bremsdruck in den Bremszylindern auch ohne Vorhandensein der elektrischen Wegsignale der Potentiometer 18 steuern kann. Der Kolben 2 trägt an seiner Stirnfläche einen Ventilsitzring 62 eines ansonsten nicht dargestellten Ventils, durch welches Vorratsdruck in die Druckkammer 54 einströmen kann. Vorzugsweise ist der Ventilsitzring 62 mit dem Kolben 2 einstückig ausgebildet.

Vor diesem Hintergrund ist die Funktionsweise der Fußpedaleinrichtung 1 wie folgt: Bei Betätigung des Fußbremspedals erfolgt die Einleitung der Betätigungskraft in die Fußpedaleinrichtung 1 über die nicht gezeigte Stößelstange in den Stößelaufnahmeabschnitt 4. Dies bewirkt eine lineare Verschiebung des kombinierten Kraftübertragungs- und Mitnehmerelements 10, in der Figur nach unten, wodurch der Mitnehmerabschnitt 20 den Stellstift 24 der Potentiometer 18 mitnimmt, welche daraufhin die Wegsignale für das elektronische Steuergerät der elektro-pneumatischen Bremseinrichtung erzeugen. Zusätzlich übertragen die Schraubenfedern 40, 42 der Federeinrichtung 28 die Stellkraft auf den Kolben 2.

Bei Ausfall des elektrischen Bremskreises, beispielsweise durch einen Defekt der Potentiometer 18, kann der Bremsdruck in den Bremszylindern nicht durch elektrische Signale gesteuert werden. In diesem Fall wirkt der pneumatische Bremskreis der Bremseinrichtung als unterlegte Sicherheitsebene, da parallel stets auch ein pneumatisches Steuersignal in Form des sich ändernden Drucks in der Druckkammer 54 infolge der Kolbenbewegung erzeugt wird, in dessen Abhängigkeit sich dann der Bremsdruck in den Bremszylindern ändert.

### Bezugszahlenliste

- 1: Fußpedaleinrichtung
- 2: Kolben
- 4: Stößelaufnahmeabschnitt
- 6: Gehäuse
- 8: Anschlusszapfen
- 10: Kraftübertragungs- und Mitnehmerelement
- 12: Verschlussdeckel
- 14: Hohlzapfen
- 16: O-Ring
- 18: Potentiometer
- 20: Mitnehmerabschnitt
- 22: Ringnut
- 24: Stellstift
- 26: Anschlussstifte
- 28: Federeinrichtung
- 30: Federaufnahmeabschnitt
- 32: Ausnehmung
- 34: Zentrierzapfen
- 36: Ausnehmung
- 38: Zentrierzapfen
- 40: Schraubenfeder
- 42: Schraubenfeder
- 44: Ringschulter
- 46: Führungsring
- 48: Ring
- 50: Boden
- 52: Führungsring
- 54: Druckkammer
- 56: O-Ring
- 58: Bewegungsanschlag
- 60: Bewegungsanschlag
- 62: Ventilsitzring

## Patentansprüche

1. Fußpedaleinrichtung (1) eines Fahrzeugs, insbesondere eines Nutzfahrzeugs, mit folgenden in einem Gehäuse (6) koaxial geführten Elementen :
- einer Stößelaufnahme (4), in welche eine von einem Fußbremspedal betätigte Stößelstange eingreifbar ist,
- ein von der Stößelstange betätigter, mit einem Pedalwegaufnehmer (18) zusammenwirkender Mitnehmer (20),
- eine Federeinrichtung (28), die einendseitig an einer von der Stößelstange betätigten Federaufnahme (30) und anderendseitig an einem im Gehäuse (6) verschieblichen Kolben (2) abgestützt ist, an welchem ein den Bremsdruck beeinflussender Druck ansteht, wobei
- zumindest die Stößelaufnahme (4), der Mitnehmer (20) und die Federaufnahme (30) der Stöβelaufnahme (4) und der Federaufnahme (30) axial zwischenangeordnet als einstückiges kombiniertes Kraftübertragungs- und Mitnehmerelement (10) ausgeführt sind,
**dadurch gekennzeichnet, dass**
- der Mitnehmer (20) des kombinierten Kraftübertragungs- und Mitnehmerelements (10) der Stößelaufnahme (4) und der Federaufnahme (30) axial zwischenangeordnet als umlaufende Ringnut (22) ausgebildet ist, in welche ein Stellstift (24) wenigstens eines Potentiometers (18) eingreift, und dass
- das Potentiometer (18) in Bezug zu dem kombinierten Kraftübertragungsund Mitnehmerelement (10) seitlich angeordnet ist.

2. Fußpedaleinrichtung nach Anspruch 1, **dadurch gekennzeichnet, dass** zumindest die Federaufnahme (30) des kombinierten Kraftübertragungs- und Mitnehmerelements (10) am Kolben (2) linear geführt ist.

3. Fußpedaleinrichtung nach Anspruch 2, **dadurch gekennzeichnet, dass** eine radial äußere Ringschulter (44) der Federaufnahme (30) des kombinierten Kraftübertragungs- und Mitnehmerelements (10) an einer radial inneren Kolbenwand des Kolbens (2) geführt ist.

4. Fußpedaleinrichtung nach Anspruch 3, **dadurch gekennzeichnet, dass** am Kolben (2) axiale Bewegungsanschläge (48, 50) für die Ringschulter (44) ausgebildet sind.

5. Fußpedaleinrichtung nach Anspruch 4, **dadurch gekennzeichnet, dass** die Federaufnahme (30) des kombinierten Kraftübertragungs- und Mitnehmerelements (10) und der Kolben (2) jeweils zueinanderweisend becherförmig mit einem zentralen Zentrierzapfen (34, 38) zur Zentrierung der Federeinrichtung (28) ausgeführt sind.

6. Fußpedaleinrichtung nach Anspruch 5, **dadurch gekennzeichnet, dass** die Stößelaufnahme (4) des kombinierten Kraftübertragungs- und Mitnehmerelements (10) in einer Durchgangsöffnung eines Deckels (12) des Gehäuses (6) geführt ist.

7. Fußpedaleinrichtung nach Anspruch 6, **dadurch gekennzeichnet, dass** der Deckel (12) und das Gehäuse (6) je einen axialen Bewegungsanschlag (58, 60) für den Kolben (2) aufweisen.

8. Fußpedaleinrichtung nach wenigstens einem der vorhergehenden Ansprüche, **dadurch gekennzeichnet, dass** das kombinierte Kraftübertragungs- und Mitnehmerelement (10) aus Aluminium besteht.

9. Fußpedaleinrichtung nach wenigstens einem der Ansprüche 1 bis 8, **dadurch gekennzeichnet, dass** das kombinierte Kraftübertragungs- und Mitnehmerelement (10) ein nach dem Pressvorgang warm ausgehärteter Fließpressformling ist.

## Claims

1. Foot pedal device (1) of a vehicle, in particular a utility vehicle, with the following elements guided coaxially in a housing (6):
- a plunger reception (4), into which a plunger bar actuated by a foot brake pedal can engage,
- a carrier (20) actuated by the plunger bar cooperating with a pedal displacement transducer (18),
- a spring device (28) which is supported at one end at a spring reception actuated by the plunger bar and at the other end at a piston (2) displaceable in the housing (6), at which piston is applied a pressure which influences the brake pressure, wherein
- at least the plunger reception (4), the carrier (20) and the spring reception (30) are designed as a single-piece combined force transmission and carrier element (10),
**characterised in that**
- the carrier (20) of the combined force transmission and carrier element (10) of the plunger reception (4) and of the spring reception (30) is formed as a circulating annular groove (22) arranged intermediately, into which engages a regulating pin (24) of at least one potentiometer (18),
and that
- the potentiometer (18) is arranged laterally with regard to the combined force transmission and carrier element (10).

2. Foot pedal device according to claim 1, **characterised in that** at least the spring reception (30) of the combined force transmission and carrier element (10) is guided linearly at the piston (2).

3. Foot pedal device according to claim 2, **characterised in that** a radial outer annular shoulder (44) of the spring reception (30) of the combined force transmission and carrier element (10) is guided at a radial inner piston wall of the piston (2).

4. Foot pedal device according to claim 3, **characterised in that** axial movement stops (48, 50) for the annular shoulder (44) are formed at the piston (2).

5. Foot pedal device according to claim 4, **characterised in that** the spring reception (30) of the combined force transmission and carrier element (10) and the piston (2) are respectively designed facing each other in a cup-shaped manner with a central centering pin (34, 38) for centering the spring device (28).

6. Foot pedal device according to claim 5, **characterised in that** the plunger reception (4) of the combined force transmission and carrier element (10) is guided in a passage opening of a lid (12) of the housing (6).

7. Foot pedal device according to claim 6, **characterised in that** the lid (12) and the housing (6) respectively have an axial movement stop (58, 60) for the piston (2).

8. Foot pedal device according to at least one of the preceding claims, **characterised in that** the combined force transmission and carrier element (10) consists of aluminium.

9. Foot pedal device according to at least one of claims 1 to 8, **characterised in that** the combined force transmission and carrier element (10) is an extrusion shaped product which is heat-cured after the the pressing process.

## Revendications

1. Dispositif (1) à pédale d'un véhicule, notamment d'un véhicule utilitaire, comprenant les éléments suivants guidés coaxialement dans un corps (6) :
- un logement (4) de poussoir, dans lequel une tige de poussoir actionnée par une pédale de frein peut pénétrer,
- un entraîneur (20) actionné par la tige du poussoir et coopérant avec un capteur (18) de trajet de la pédale,
- un dispositif (28) à ressort, qui s'appuie du côté d'une extrémité sur un logement (30) de ressort actionné par la tige de poussoir, et du côté de l'autre extrémité sur un piston (2), qui coulisse dans le corps (6) et auquel s'applique une pression influençant la pression de frein,
- au moins le logement (4) du poussoir, l'entraîneur (20) et le logement (30) du ressort sont réalisés sous la forme d'un élément (10) d'une seule pièce de transmission de force et d'entraîneur combiné, **caractérisé en ce que**
- l'entraîneur (20) de l'élément (10) combiné de transmission de force et d'entraîneur, interposé axialement entre le logement (4) du poussoir et le logement (30) du ressort, est constitué sous la forme d'une rainure (22) annulaire faisant le tour et dans laquelle pénètre une broche (24) de réglage d'un potentiomètre (18), et **en ce que**
- le potentiomètre (18) est disposé latéralement par rapport à l'élément (10) combiné de transmission de force et d'entraîneur.

2. Dispositif à pédale suivant la revendication 1, **caractérisé en ce qu'**au moins le logement (30) du ressort de l'élément (10) combiné de transmission de force et d'entraîneur est guidé linéairement sur le piston (2).

3. Dispositif à pédale suivant la revendication 2, **caractérisé en ce qu'**un épaulement (44) annulaire extérieur radialement du logement (30) du ressort de l'élément (10) combiné de transmission de force et d'entraîneur est guidé sur une paroi intérieure radialement du piston (2).

4. Dispositif à pédale suivant la revendication 3, **caractérisé en ce que** sur le piston (2) sont formées des butées (48, 50) axiales de déplacement pour l'épaulement (44) annulaire.

5. Dispositif à pédale suivant la revendication 4, **caractérisé en ce que** le logement (30) du ressort de l'élément (10) combiné de transmission de force et d'entraîneur et le piston (2) sont respectivement réalisés en forme de coupes tournées l'une vers l'autre, en ayant un tourillon (34, 38) central de centrage pour le centrage du dispositif (28) à ressort.

6. Dispositif à pédale suivant la revendication 5, **caractérisé en ce que** le logement (4) de poussoir de l'élément (10) combiné de transmission de force et d'entraîneur est guidé dans une ouverture de passage d'un couvercle (12) du corps (6).

7. Dispositif à pédale suivant la revendication 6, **caractérisé en ce que** le couvercle (12) et le corps (6) ont respectivement une butée (58, 60) axiale de déplacement pour le piston (2).

8. Dispositif à pédale suivant au moins l'une des revendications précédentes, **caractérisé en ce que** l'élément (10) combiné de transmission de force et d'entraîneur est en aluminium.

9. Dispositif à pédale suivant au moins l'une des revendications 1 à 8, **caractérisé en ce que** l'élément (10) combiné de transmission de force et d'entraîneur est un aggloméré filé à la presse et durci à chaud après l'opération à la presse.
